# EUROPEAN PATENT SPECIFICATION

(11) **EP 1 928 142 B1**
(45) Date of publication and mention of the grant of the patent: **23.11.2011**
(21) Application number: 07115347.2
(22) Date of filing: 30.08.2007
(51) Int. Cl.: H04L 29/06

(54) **Relocation controlling apparatus in wireless communications network**
Verschiebungssteuerungsvorrichtung in einem drahtlosen Kommunikationsnetzwerk
Appareil de contrôle de réadressage dans un réseau de communication sans fil

(30) Priority: 30.11.2006 JP 2006324239
(43) Date of publication of application: 04.06.2008
(73) Proprietor: Fujitsu Ltd., Kawasaki-shi, Kanagawa 211-8588 (JP)
(72) Inventor: Yonenaga, Nobue c/o FUJITSU LIMITED,, Kawasaki-shi, Kanagawa 211-8588 (JP)
(74) Representative: Cooper-Rolfe, Elizabeth Louise

(56) References cited:
- WO-A-2007/137069
- US-A1- 2006 206 597
- NGUYEN-VUONG ET AL: "An Architecture for UMTS-WIMAX Interworking" BROADBAND CONVERGENCE NETWORKS, 2006. BCN 2006. THE 1ST INTERNATIONAL WORKSHOP ON VANCOUVER, CANADA 07-07 APRIL 2006, PISCATAWAY, NJ, USA,IEEE, 1 January 2006 (2006-01-01), pages 1-10, XP031101752 ISBN: 978-1-4244-0146-8

## Description

### Background of the Invention

### Field of the Invention

The present invention relates to an apparatus for controlling a relocation process that occurs with the shift of a mobile station in a wireless communications network.

### Description of the Related Art

WiMAX (Worldwide Interoperability for Microwave Access) is a wireless signal transmission technique based on a wireless transmission system standardized with IEEE (Institute of Electrical and Electronic Engineers) 802.16. With this technique, a user terminal accesses a wireless base station (BS) with microwaves, and a system can be interoperated on a global scale.

In the WiMAX system, a network access provider (NAP) provides a user with means for wireless access via one or more access service networks (ASNs) . Additionally, a network service provider (NSP) provides a user with various types of services including an Internet Protocol (IP) connection via a connectivity service network (CSN). A plurality of CSN's can share one ASN.

A mobile station (MS), which is a user terminal, shifts among a plurality of foreign agents (FAs) existing in one NAP domain. If a handover occurs among the plurality of FA's as described above, an anchor access service network gateway (anchor ASN-GW) having FA's may possibly lack its own resources unless an FA is shifted finally. For this reason, a trigger and means for shifting an FA become necessary.

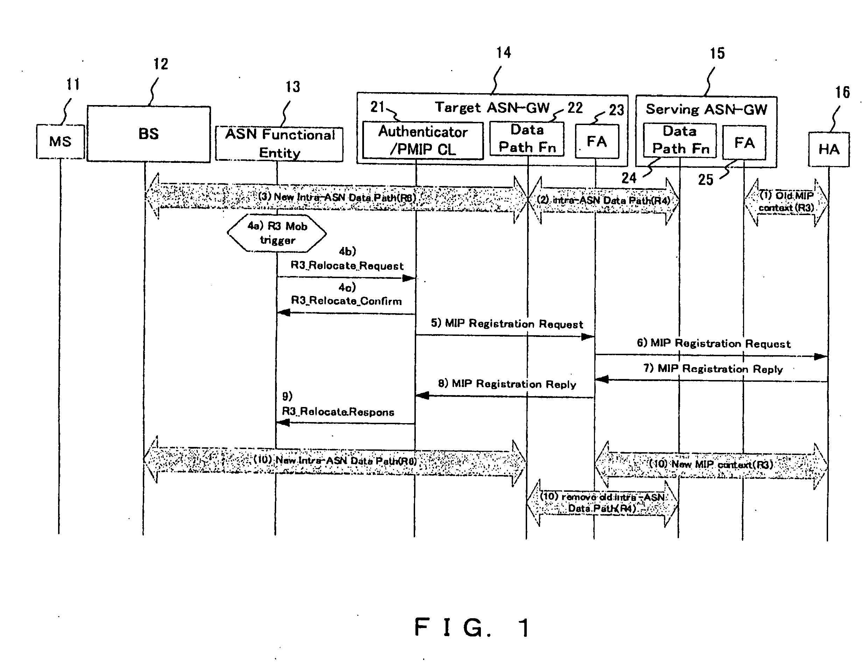

Fig. 1 shows the sequence of "MS Mobility Event Triggering a Network Initiated R3 Re-anchoring (PMIP)" explained in NWG-Stage-2 (Non-patent Document 1) of the WiMAX Forum.

Non-patent Document 1: "WiMAX End-to-End Network Systems Architecture (Stage 2: Architecture Tenets, Reference Model and Reference Points)", WiMAX Forum, March 2006.

Reference points R1, R3, R4, and R6 are conceptual points in the following respective sections.
R1: between an MS and a BS
R3: between an ASN-GW and a CSN
R4: between an ASN-GW and an ASN-GW (intra-ASN-GW)
R6: between a BS and an ASN-GW

A serving ASN-GW 15 is a gateway of an ASN by which an MS 11 gains access, and a target ASN-GW 14 is a gateway of an ASN at a relocation destination. A base station (BS) 12 is a BS subordinate to the target ASN-GW 14.

Procedures for R3 re-anchoring in the sequence of Fig. 1 are as follows.
(1) - (3) A BS 12, a data path function 22 within the target ASN-GW 14, a data path function 24 within the serving ASN-GW 15, an FA 25 within the serving ASN-GW 15, and a home agent (HA) 16 complete the establishment of intra-ASN data paths before executing R3 mobility.
(4a) For radio resource management (RRM) based on an MS mobility event, an R3 relocation request is not directly transmitted from an RRM controller to a PMIP (Proxy-Mobile IP) mobility manager; rather it is transferred via an ASN functional entity 13 when the R3 mobility triggering occurs.
(4b) The ASN functional entity 13 transmits an R3_Relocate. Request message, which is an R3 relocation request, to the target ASN-GW 14 at a suitable timing. This message includes the ID of the MS 11, and the address of a target FA 23.
(4c) Upon receipt of the R3_Relocate. Request message, an authenticatcr/PMIP client 21 of the target ASN-GW 14 remits an R3_Relocate. Confirm message, which indicates the reception of the R3 relocation request, to the ASN functional entity 13.
(5)-(8) The authenticator/PMIP client 21 starts FA anchoring after transmitting the R3_Relocate.Confirm message. Specifically, the authenticator/PMIP client 21 makes an MIP (Mobile IP) registration. As CoA (Care of Address), the address of the ASN-GW 14, or CoA issued from the FA 23 is used. The CoA is an IP address for the FA 23 used as the endpoint of a tunnel along with the HA 16.

The HA 16 authenticates an MIP Registration Request message (MN-HA authentication extension), and remits an MIP Registration Reply message. The HA 16 caches authentication information for checking MN (mobile Node) -HA authentication at the time of the setup.
(9), (10) The authenticator/PMIP client 21 transmits an R3_Relocate.Response message, which notifies the ASN functional entity 13 of the completion of the R3 relocation. Thereafter, the ASN functional entity 13 performs operations such as the release of a GRE (Generic Routing Encapsulation) key and the like to release an R4 data path.

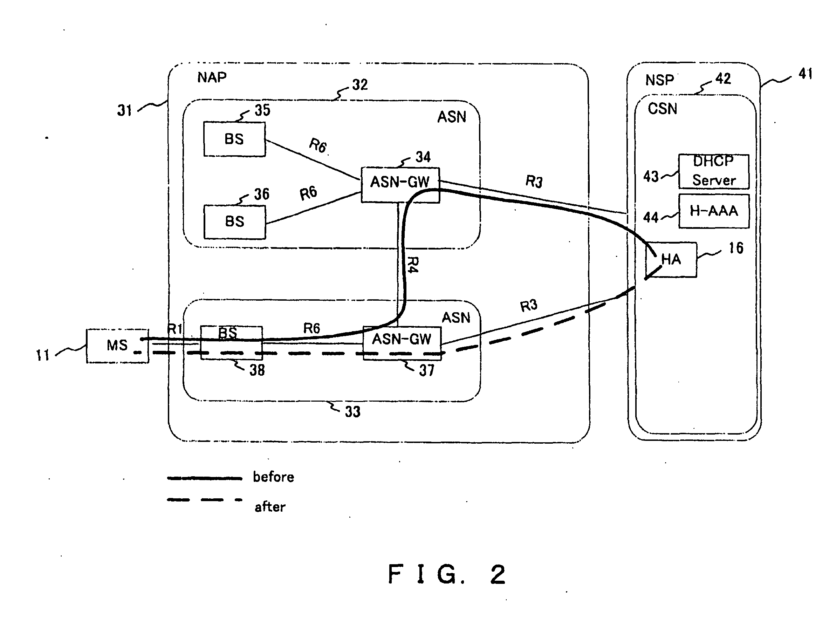

Fig. 2 exemplifies the R3 anchoring. In an NAP domain 31, ASNs 32 and 33 exist. An ASN-GW 34 and BSes 35, 36 exist within the ASN 32, whereas an ASN-GW 37 and a BS 38 exist within the ASN 33. In the meantime, a CSN 42 exists in an NSP domain 41, and an HA 16, a DHCP (Dynamic Host Configuration Protocol) server 43, and an H-AAA (Home Authentication, Authorization, and Accounting) server 44 exist within the CSN 42.

At first, the MS 11 is connected to the HA 16 via the BS 38 of the ASN 33, an FA within the ASN-GW 37, and an FA within the ASN-GW 34 as indicated by a solid line. In this way, the ASN-GW 34 corresponds to an anchor ASN-GW connected to the HA 16, and the ASN-GW 37 corresponds to a target ASN-GW 14.

If an R3 mobility trigger occurs, the anchor ASN-GW is changed from the ASN-GW 34 to the ASN-GW 37 according to the sequence shown in Fig. 1. Thereafter, the MS 11 is connected to the HA 16 via the BS 38 and the FA within the ASN-GW 37 as indicated by a broken line.

In the case of IPv4, re-anchoring is caused to occur from the current FA to a new FA, and upstream/downstream data paths are then updated with a binding update or an MIP re-registration.

As the R3 mobility triggers, the mobility of the MS 11, optimization of network resources, and the like are considered. In all cases, the handover operation of R3 mobility is started after the establishment of the R6 and R4 data paths, and inter-ASN mobility without CoA updates are completed.

Patent Document 1 as follows relates to a handoff method in a mobile IP network.

Patent Document 1: Japanese Published Unexamined Patent Publication No. 2005-323391-A (Application No. JP 2005169676).

The conventional R3 relocation process described above has the following problem.

Non-patent Document 1 does not explicitly recite the R3 mobility trigger ((4a) of Fig. 1), which indicates the timing at which the ASN functional entity transmits the R3_Relocate.Request message. Accordingly, it is unclear at which timing the R3 relocation process is to be started when a WiMAX system is configured. Furthermore, NWG-Stage-3 does not refer to this timing, and also CMIP (Client Mobile IP)v4 and CMIPv6 are similar.

W02007/137069 A discloses a method of maintaining the current location information of a mobile station within a network comprising a plurality of access service networks each containing a paging controller. This document is cited under Article 54(3)EPC and as such is relevant to the novelty of the invention only.

### Summary of the Invention

It is desirable to make clear a trigger for starting a relocation process, which occurs with the shift of a mobile station, in a wireless communications network such as WiMAX.

In accordance with a first aspect of the present invention a relocation controlling apparatus is provided having the features of claim 1 below.

In accordance with a second aspect of the present invention a relocation controlling method is provided having the features of claim 10 below.

Preferred features are set out in the sub-claims.

### Brief Description of the Drawings

Fig. 1 shows the sequence of R3 re-anchoring in a conventional WiMAX network;
Fig. 2 shows the R3 re-anchoring;
Fig. 3 shows the principle of a relocation controlling apparatus according to the present invention;
Fig. 4 shows a first relocation trigger;
Fig. 5 shows a second relocation trigger;
Fig. 6 shows a third relocation trigger;
Fig. 7 shows a fourth relocation trigger;
Fig. 8 shows a fifth relocation trigger; and
Fig. 9 shows a sixth relocation trigger.

### Description of the Preferred Embodiments

Preferred embodiments for implementing the present invention are described below with reference to the drawings.

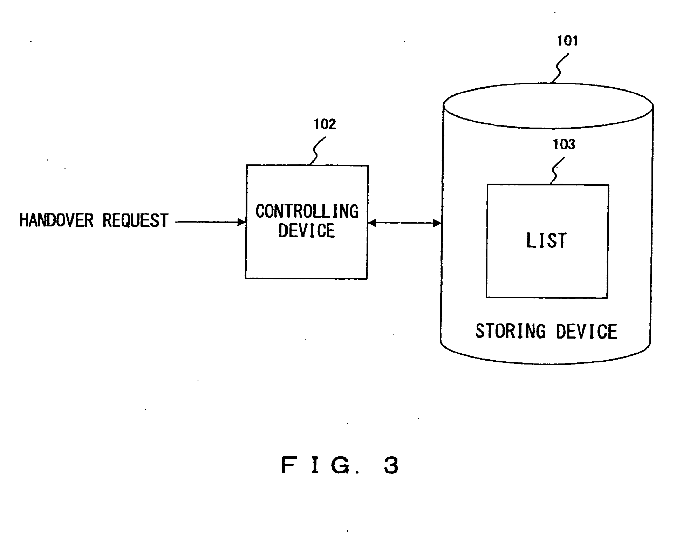

Fig. 3 shows the principle of a relocation controlling apparatus according to the present invention. The relocation controlling apparatus shown in Fig. 3 comprises a storing device. 101 and a controlling device 102, and controls a connection between an access service network and a connectivity service network in a communications network composed of the access service network to which a mobile station gains wireless access and the connectivity service network for providing the mobile station with a service including an Internet Protocol connection via the access service network.

The storing device 101 stores a list 103 composed of a plurality of pieces of identification information corresponding to a plurality of access service networks. The controlling device 102 starts a relocation process to change the access service network connected to the connectivity service network to an access service network at a relocation destination if target identification information, which is specified by a handover request accompanying the shift of the mobile station and which indicates the access service network at the relocation destination, is not included in the list 103.

Upon receipt of the handover request from the mobile station, the controlling device 102 obtains the target identification information from the handover request, and searches the list 103 by using the target identification information as a key. If the target identification information is not included in the list 103, the controlling device 102 intiates the relocation process by using the search result as a trigger.

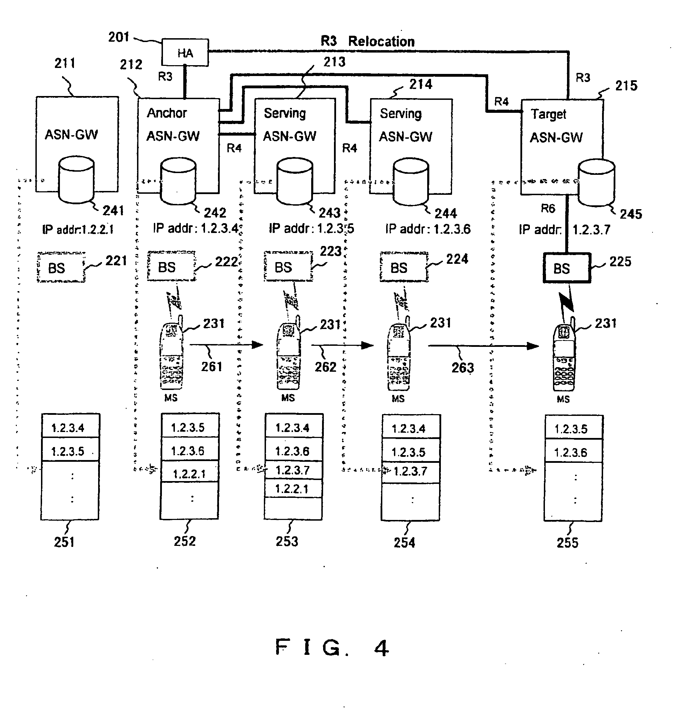

The storing device 101 corresponds to, for example, data storing units 242, 342, 441, 541, 641, and 742 in Fig. 4 through Fig. 9, which will be described later, whereas the controlling device 102 corresponds to, for example, anchor ASN-GW's 212, 312, 412, 511, 611, and 712.

According to the present invention, a relocation trigger is made clear while a mobile station is making a communication in a communications network, such as a WiMAX system, composed of an access service network and a connectivity service network. As a result, the sequence of R3 re-anchoring (PMIP/CMIPv4/CMIPv6) in the WiMAX system can be concretely implemented, and a telecommunications carrier or other such business that runs WiMAX business, can easily configure a WiMAX system.

The R3 relocation trigger and the execution determination of the R3 relocation process in the WiMAX system are implemented via the following methods.
(1) R4/R6 handover trigger
   An ASN functional entity determines whether or not to execute the R3 relocation process with the following pattern (2) by using an R4/R6 handover as a trigger and transmits an R3_Relocate.Request message. However, a PMIP client transmits an MIP Registration Request message based on the R3 relocation trigger if the ASN functional entity and the PMIP client are included in the same ASN-GW.
(2) In a case in which an MS is making a communication
   If the MS shifts during a communication, the identification information (ID) of a target ASN-GW is known from an exchange of control messages of the R4/R6 handover. An anchor ASN-GW searches a list of ASN-GW IDs, which is set in each ASN-GW by a system default, by using the ID as a key. If the ID of the target ASN-GW is not included in the list, the R3 relocation process is started by using the search results as a trigger.

In this list, for example, the IDs of a plurality of adjacent ASN-GWs in a network topology are set. A set of BSes specified by a paging group is not diverted but a list of ASN-GW IDs is newly provided, whereby an anchor ASN-GW can be continually positioned at the center of a cover area. In this case, R3 relocation rarely occurs .

Additionally, even if the ID of the target ASN-GW is included in the list, the R3 relocation process is started when any of the following factors occurs in the anchor ASN-GW.
(a) system congestion
(b) lack of resources (MSID: an excessive number of connections)
(c) excessive band (excessive band used on the R3 side)
(d) invocation/noninvocation of the R3 relocation process with a maintenance command.

Specific examples of the R3 relocation trigger are described below with reference to Figs. 4 through 9.

Fig. 4 shows an example of the R3 relocation trigger using the above described ASN-GW ID list. In this case, the relocation trigger occurs according to the following procedures.
1. ASN-GWs 211 to 215 respectively set ASN-GW ID lists 251 to 255 for R3 relocation in data storing units 241 to 245 as station data or system data at the startup of the system.
   To the ASN-GWs 211 to 215, IP addresses "1.2.2.1", "1.2.3.4", "1.2.3.5", "1.2.3.6", and "1.2.3.7" are respectively assigned as their IDs, and BSes 221 to 225 are respectively connected. Additionally, an HA 201 is connected to the ASN-GW 212.
2. If the MS 231 shifts as indicated by arrow 261 during a communication, the BS opposite to it is changed from BS 222 to BS 223. At this time, the anchor ASN-GW 212 receives a handover request, which specifies the ASN-GW 213 as a target ASN-GW, from the MS 231, and searches the ASN-GW ID list 252 by using the ID "1.2.3.5" of the ASN-GW 213, which is included in the handover request, as a key.
   In this example, "1.2.2.1", "1.2.3.5", and "1.2.3.6" are registered as the IDs of adjacent ASN-GWs in the ASN-GW ID list 252, and "1.2.3.5" exists in the list. Accordingly, the R3 relocation process is not started.
3. Next, if the MS 231 shifts as indicated by arrow 262 during a communication, the BS opposite to it is changed from BS 223 to BS 224. At this time, the anchor ASN-GW 212 receives a handover request, which, specifies the ASN-GW 214 as a target ASN-GW, from the MS 231, and searches the ASN-GW ID list 252 by using the ID "1.2.3.6" of the ASN-GW 214 as a key. Since "1.2.3.6" exists in the list, the R3 relocation process is not started.
4. Next, if the MS 231 shifts as indicated by arrow 263 during a communication, the BS opposite to it is changed from BS 224 to BS 225. At this time, the anchor ASN-GW 212 receives a handover request, which specifies the ASN-GW 215 as a target ASN-GW, from the MS 231, and searches the ASN-GW ID list 252 by using the ID "1.2.3.7" of the ASN-GW 215 as a key. Since "1.2.3.7" does not exist in the list at this time, the R3 relocation process is started.

Specifically, the anchor ASN-GW 212 operates as the ASN functional entity 13 of Fig. 1, and transmits an R3_Relocate.Request message to the target ASN-GW 215. With this relocation process, the anchor ASN-GW is changed from the ASN-GW 212 to the ASN-GW 215.

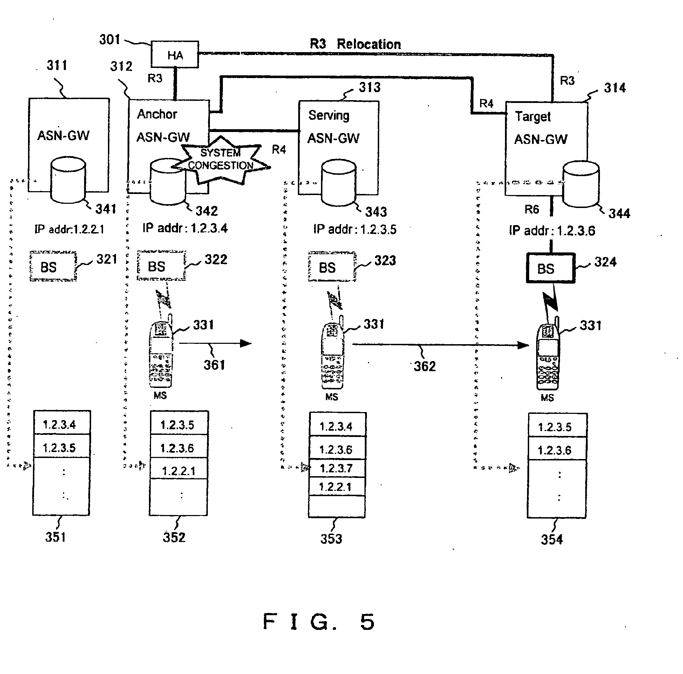

Fig. 5 shows an example of the R3 relocation trigger caused by the above described system congestion. In this case, the relocation trigger occurs according to the following procedures.
1. At the startup of the system, ASN-GWs 311 to 314 respectively set ASN-GW ID lists 351 to 354 in data storing units 341 to 344.
   To the ASN-GWs 311 to 314, IP addresses "1.2.2.1", "1.2.3.4", "1.2.3.5", and "1.2.3.6" are respectively assigned as their IDs, and BSes 321 to 324 are respectively connected. Additionally, an HA 301 is connected to the ASN-GW 312.
2. If an MS 331 shifts as indicated by arrow 361 during a communication, the BS opposite to it is changed from BS 322 to BS 323. At this time, the anchor ASN-GW 312 receives a handover request, which specifies the ASN-GW 313 as a target ASN-GW, from the MS 331, and searches the ASN-GW ID list 352 by using the ID "1.2.3.5" of the ASN-GW 313, which is included in the handover request, as a key.
   In this example, "1.2.2.1", "1.2.3.5", and "1.2.3.6" are registered as the IDs of adjacent ASN-GWs in the ASN-GW list 352, and "1.2.3.5" exists in the list. Accordingly, the R3 relocation process is not started. The anchor ASN-GW 312 stores the ID "1.2.3.5" of the target ASN-GW 313 in the data storing unit 342.
3. Next, if the MS 331 shifts as indicated by arrow 362 during a communication, the BS opposite to it is changed from BS 323 to BS 324. At this time, the anchor ASN-GW 212 receives a handover request, which specifies the ASN-GW 314 as a target ASN-GW, from the MS 331, and searches the ASN-GW ID list 352 by using the ID "1.2.3.6" of the ASN-GW 314 as a key. Since "1.2.3.6" exists in the list, the R3 relocation process is not started. The anchor ASN-GW 312 stores the ID "1.2.3.6" of the target ASN-GW 314 in the data storing unit 342.
4. Next, if system congestion occurs in the anchor ASN-GW 312 while the MS 331 is making a communication, the anchor ASN-GW 312 starts the R3 relocation process by using the stored ID "1.2.3.6". As a result, the anchor ASN-GW is changed from the ASN-GW 312 to the ASN-GW 314.

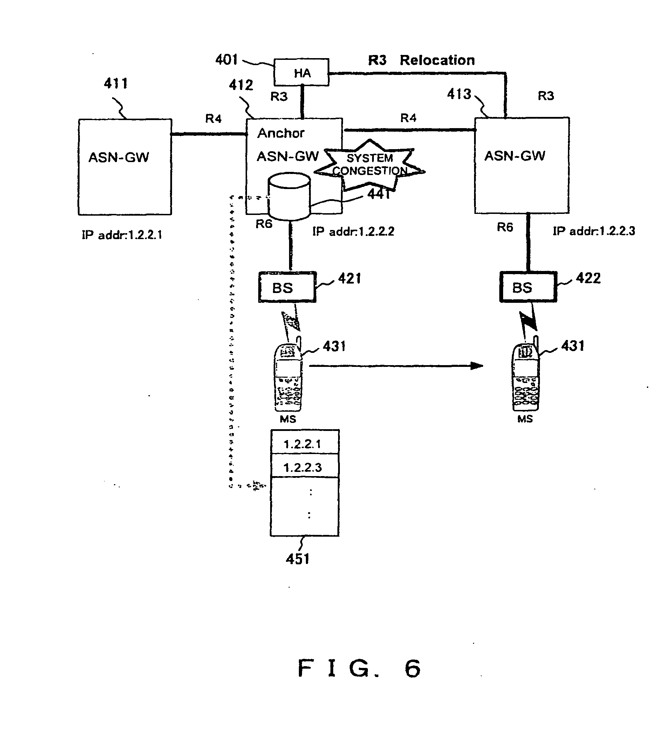

Fig. 6 shows another example of the R3 relocation trigger caused by system congestion. In this case, the relocation trigger occurs according to the following procedures.
1. Each ASN-GW periodically exchanges system information with other ASN-GWs within the ASN-GW ID list via R4. This system information includes information that indicates such states as the presence/absence of system congestion.
   To the ASN-GWs 411 to 413, IP addresses "1.2.2.1", "1.2. 2.2", and "1.2.2.3" are respectively assigned as their IDS. To the ASN-GWs 412 and 413, BSes 421 and 422 are respectively connected. Additionally, an HA 401 is connected to the ASN-GW 412, and an ASN-GW ID list 451 is set in a data storing unit 441 of the ASN-GW 412.
2. If system congestion occurs in the anchor ASN-GW 412 while an MS 431 is making a communication, the anchor ASN-GW 412 searches the ASN-GW ID list 451 for an ASN-GW in a normal state where system congestion does not occur. For example, if the ASN-GW 413 is in the normal state, the R3 relocation process is started by using the ID "1.2.2.3" as the ID of a target ASN-GW. As a result, the anchor ASN-GW is changed from the ASN-GW 412 to the ASN-GW 413, and the BS that is opposite to the MS 431 is changed from ES 421 to BS 422.

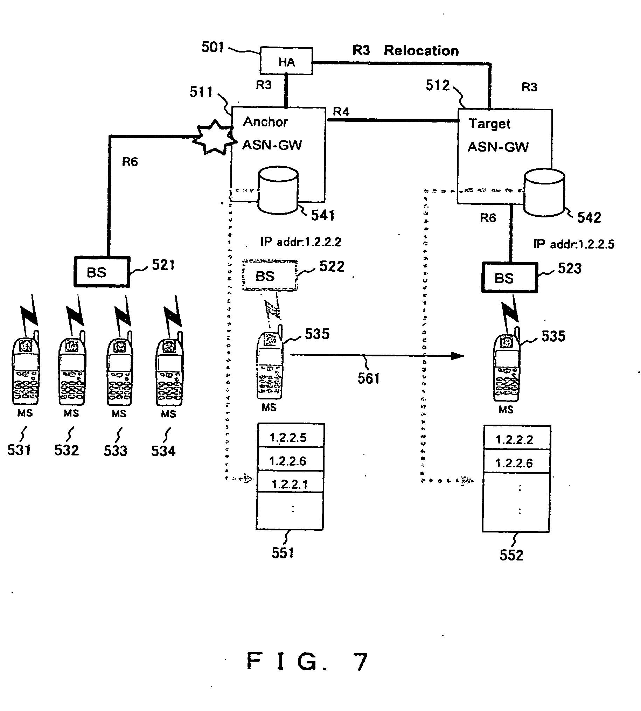

Fig. 7 shows an example of the R3 relocation trigger caused by the above described lack of resources. In this case, the relocation trigger occurs according to the following procedures.
1. At the startup of the system, ASN-GWs 511 and 512 respectively set ASN-GW ID lists 551 and 552 in data storing units 541 and 542.
   To the ASN-GWs 511 and 512, IP addresses "1.2.2.2" and "1.2.2.5" are respectively assigned as their IDs. BSes 521 and 522 are connected to the ASN-GW 511, whereas a BS 523 is connected to the ASN-GW 512. Additionally, an HA 501 is connected to the ASN-GW 511.
2. If an MS 535 shifts as indicated by arrow 561 during a communication, the BS opposite to it is changed from BS 522 to BS 523. At this time, the anchor ASN-GW 511 receives a handover request, which specifies the ASN-GW 512 as a target ASN-GW, from the MS 535, and searches the ASN-GW ID list 551 by using the ID "1.2.2.5" of the ASN-GW 512, which is included in the handover request, as a key.

In this example, "1.2.2.1", "1.2.2.5", and "1.2.2.6" are registered as the IDs of adjacent ASN-GWs in the ASN-GW ID list 551, and "1.2.2.5" exists in the list.

Next, the anchor ASN-GW 511 checks whether or not resources being used exceed a predetermined threshold value. In this example, MSes 531 to 534 are connected to the anchor ASN-GW 511 via BS 521, and the number of connected MSIDs exceeds the threshold value. Therefore, the R3 relocation process is started by using the ID "1.2.2.5" of the target ASN-GW 512. As a result, the anchor ASN-GW is changed from the ASN-GW 511 to the ASN-GW 512.

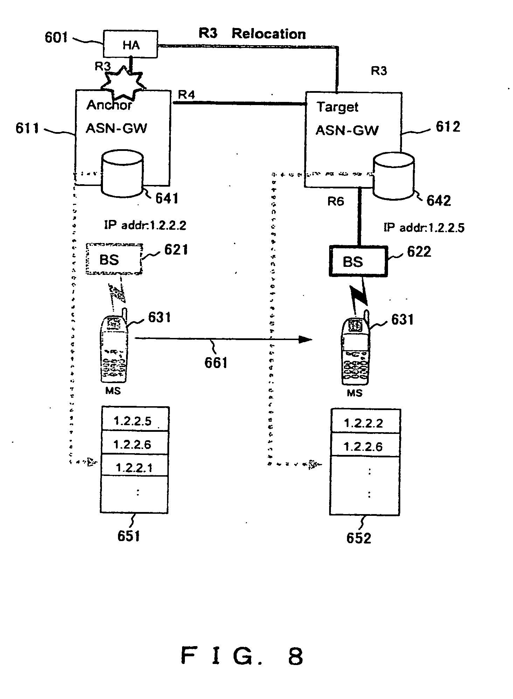

Fig. 8 shows an example of the R3 relocation trigger caused by the above described excessive band. In this case, the relocation trigger occurs according to the following procedures.
1. At the startup of the system, ASN-GWs 611 and 612 respectively set ASN-GW ID lists 651 and 652 in data storing units 641 and 642.
To the ASN-GWs 611 and 612, IP addresses "1.2.2.2" and "1.2.2.5" are respectively assigned as their IDs, and BSes 621 and 622 are respectively connected. Additionally, an HA 601 is connected to the ASN-GW 611.
2. If an MS 631 shifts as indicated by arrow 661 during a communication, the BS opposite to it is changed from BS 621 to BS 622. At this time, the anchor ASN-GW 611 receives a handover request, which specifies the ASN-GW 612 as a target ASN-GW, from the MS 631, and searches the ASN-GW ID list 651 by using the ID "1.2.2.5" of the ASN-GW 612, which is included in the handover request, as a key.
   In this example, "1.2.2.1", "1.2.2.5", and "1.2.2.6" are registered as the IDs of adjacent ASN-GWs in the ASN-GW ID list 651, and "1.2.2.5" exists in the list.

Next, the anchor ASN-GW 611 checks whether or not a band used on the R3 side exceeds a predetermined threshold value. This threshold value is set, for example, on the basis of the accumulation of best effort bands. If the used band exceeds the threshold value, the R3 relocation process is started by using the ID "1.2.2.5" of the target ASN-GW 612. As a result, the anchor ASN-GW is changed from the ASN-GW 611 to the ASN-GW 612.

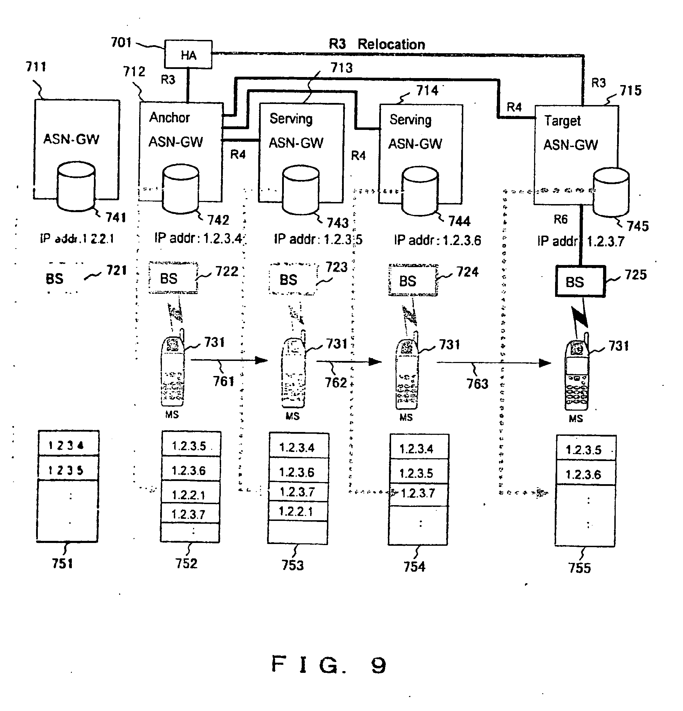

Fig. 9 shows an example of the R3 relocation trigger caused by the above described maintenance command. In this case, the relocation trigger occurs according to the following procedures.
1. At the startup of the system, ASN-GWs 711 to 715 respectively set ASN-GW ID lists 715 to 755 in data storing units 741 to 745.
   To the ASN-GWs 711 to 715, IP addresses "1.2.2.1", "1.2.3.4", "1.2.3.5", "1.2.3.6", and "1.2.3.7" are respectively assigned as their IDs, and BSes 721 to 725 are respectively connected. Additionally, an HA 701 is connected to the ASN-GW 712.
2. An administrator inputs a command, which specifies the noninvocation of the R3 relocation process, to the anchor ASN-GW 712.
3. If an MS 731 shifts as indicated by arrow 761 during a communication, the BS opposite to it is changed from BS 722 to BS 723. At this time, the anchor ASN-GW 712 receives a handover request, which specifies the ASN-GW 713 as a target ASN-GW, from the MS 731, and searches the ASN-GW ID list 752 by using the ID "1.2.3.5" of the ASN-GW 713, which is included in the handover request, as a key.
   In this example, "1.2.2.1", "1.2.3.5", "1.2.3.6", and "1.2.3.7" are registered as the IDs of adjacent ASN-GWs in the ASN-GW ID list 752, and "1.2.3.5" exists in the list.
   Next, the anchor ASN-GW 712 checks whether or not the input command indicates the invocation of the R3 relocation process. Because noninvocation is specified here, the R3 relocation process is not started.
4. Next, if the MS 731 shifts as indicated by arrow 762 during a communication, the BS opposite to it is changed from the BS 723 to the BS 724. At this time, the anchor ASN-GW 712 receives a handover request, which specifies the ASN-GW 714 as a target ASN-GW, from the MS 731, and searches the ASN-GW ID list 752 by using the ID "1.2.3.6" of the ASN-GW 714 as a key. Because "1.2.3.6" exists in the list, it is then checked whether or not the input command indicates the invocation of the R3 relocation process. Because noninvocation is specified here, the R3 relocation process is not started.
5. The maintenance person inputs a command, which specifies the invocation of the R3 relocation process, to the anchor ASN-GW 712.
6. If the MS 731 shifts as indicated by arrow 763 during a communication, the BS opposite to it is changed from the BS 724 to the BS 725. At this time, the anchor ASN-GW 712 receives a handover request, which specifies the ASN-GW 715 as a target ASN-GW, from the MS 731, and searches the ASN-GW ID list 752 by using the ID "1.2.3.7" of the ASN-GW 715 as a key. Because
"1.2.3.7" exists in the list, it is then checked whether or not the input command indicates the invocation of the R3 relocation process.

Because the invocation is specified here, the R3 relocation process is started by using the ID "1.2.3.7" of the target ASN-GM 715. As a result, the anchor ASN-GM is changed from the ASN-GW 712 to the ASN-GW 715.

In the above described preferred embodiments, the IP address of an ASN-GW is used as an ID. However, another information item corresponding to each ASN may be used as an ID.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A relocation controlling apparatus for controlling a connection between an access service network (32) and a connectivity service network (42) in a communications network including the access service network which a mobile station (231, 331, 431, 535, 631, 731) wirelessly accesses and the connectivity service network for providing the mobile station with a service including an Internet Protocol connection via the access service network, comprising:
a storing device (101, 242, 342, 441, 541, 641, 742) for storing a list (103, 252, 352, 451, 551, 651, 752) including identification information of a plurality of access service networks; and
a controlling device (102, 212, 312, 412, 511, 611, 712) for seerching the list by using as a key target identification of an access service network that is specified by a handover request for a the mobile station, and for starting a relocation process for changing the access service network connected to the connectivity service network to a target access service network if identification information of the target access service network specified by the handover request for the mobile station is not included in the list.

2. The relocation controlling apparatus according to claim 1, wherein:
the list (252, 352, 451, 551, 651, 752) includes identification information of a plurality of gateways (211, 213, 214, 311, 313, 314, 411, 413, 512, 612, 711, 713, 714, 715), which respectively belong to the plurality of access service networks; and
said controlling device (212, 312, 412, 511, 611, 712) searches the list by using identification information of a target gateway (215, 314, 413, 512, 612, 715) of the target access service network as the identification information, and, if the identification information is not included in the list, starts the relocation process for changing a gateway of the access service network connected to the connectivity service network to the target gateway of the target access service network.

3. The relocation controlling apparatus according to claim 2, wherein
the list (252) includes identification information of gateways (211, 213, 214) of a plurality of access service networks adjacent to an access service network to which the relocation controlling apparatus belongs in a network topology.

4. The relocation controlling apparatus according to claim 2 or 3, wherein
said controlling device (312) stores the identification information of the target access service network in said storing device (342) if the target identification information is included in the list (352), and starts the relocation process by using the stored identification information of the target access service network if congestion occurs in the gateway (312) of the access service network connected to the connectivity service network.

5. The relocation controlling apparatus according to any one of claims 2 to 4, wherein
said controlling device (412) obtains system information which indicates a presence/absence of congestion in the plurality of gateways (411, 413) included in the list (451), and, if congestion occurs in the gateway (412) of the access service network connected to the connectivity service network, starts the relocation process by using, as a target access service network, an access service network to which a gateway (413) where congestion does not occur among the plurality of gateways belongs.

6. The relocation controlling apparatus according to any one of claims 2 to 5, wherein
said controlling device (511) checks whether or not resources being used in the gateway (511) of the access service network connected to the connectivity service network exceed a threshold value if the identification information of the target access service network is included in the list (551), and starts the relocation process if the resources being used exceed the threshold value.

7. The relocation controlling apparatus according to claim 6, wherein
said controlling device (511) checks, as the resources being used, a number of mobile stations (531, 532, 533, 534) connected to the gateway of the access service network connected to the connectivity service network.

8. The relocation controlling apparatus according to claim 2, wherein
said controlling device (611) checks whether or not a band used by the gateway (611) of the access service network connected to the connectivity service network exceeds a threshold value if the identification information of the target access service network is included in the list (651), and, if the used band exceeds the threshold value, starts the relocation process.

9. The relocation controlling apparatus according to claim 2, wherein
said controlling device (712) receives instructional information which indicates invocation or noninvocation of relocation, checks the instructional information if the target identification information is included in the list (752), and starts the relocation process if the instructional information indicates the invocation of the relocation.

10. A relocation controlling method for controlling a connection between an access service network (32) and a connectivity service network (42) in a communications network comprising the access service network to which a mobile station (231, 331, 431, 535, 631, 731) wirelessly accesses, and the connectivity service network for providing the mobile station with services including an Internet Protocol connection via the access service network, comprising:
searching a list (103, 252, 352, 451, 551, 651, 752) including identification information of a plurality of access service networks by using as a key target identification information of an access service network that is specified by a handover request for the mobile station; and
starting a relocation process for changing the access service network connected to the connectivity service network to the target access service network if the identification information is not included in the list.

## Patentansprüche

1. Relocation-Steuervorrichtung zum Steuern einer Verbindung zwischen einem Zugriffsdienstnetz (32) und einem Konnektivitätsdienstnetz (42) in einem Kommunikationsnetz, welches das Zugriffsdienstnetz enthält, auf das eine Mobilstation (231, 331, 431, 535, 631, 731) drahtlos zugreift, und das Konnektivitatsdienstnetz, um der Mobilstation einen Dienst, der eine Internet-Protokoll-Verbindung enthält, über das Zugriffesdienstnetz anzubieten, umfassend:
eine Speicheranordnung (101, 242, 342, 441, 541, 641, 742) zum Speichern einer Liste (103, 252, 352, 451, 551, 651, 752), die Identifikationsinformationen einer Vielzahl von Zugriffsdienstnetzen enthält; und
eine Steueranordnung (102, 212, 312, 412, 511, 611, 712) zum Durchsuchen der Liste unter Verwendung, als Schlüssel, einer Zielidentifikation eines Zugriffsdienstnetzes, das durch eine Handover-Aufforderung für die Mobilstation spezifiziert ist, und zum Starten eines Relocation-Prozesses zum Umstellen des Zugriffsdienstnetzes, das mit dem Konnektivitätsdienstnetz verbunden ist, auf ein Zielzugriffsdienstnetz, falls Identifikationsinformationen des Zielzugriffsdienstnetzes, das durch die Handover-Aufforderung für die Mobilstation spezifiziert ist, nicht in der Liste enthalten sind.

2. Relocation-Steuervorrichtung nach Anspruch 1, bei der:
die Liste (252, 352, 451, 551, 651, 752) Identifikationsinformationen einer Vielzahl von Gateways (211, 213, 214, 311, 313, 314, 411, 413, 512, 612, 711, 713, 714, 715) enthält, die jeweilig zu der Vielzahl von Zugriffsdienstnetzen gehören; und
die Steueranordnung (212, 312, 412, 511, 611, 712) die Liste unter Verwendung von Identifikationsinformationen eines ziel-Gateways (215, 314, 413, 512, 612, 715) des Zielzugriffsdienstnetzes als Identifikationsinformatinnen durchsucht und dann, falls die Identifikationsinformationen nicht in der Liste enthalten, sind, den Relocation-Prozess zum Umstellen eines Gateways des Zugriffsdienstnetzes, das mit dem Konnektivitätsdienstnetz verbunden ist, auf das Ziel-Gateway des Zielzugriffsdienstnetzes startet.

3. Relocation-Steuervorrichtung nach Anspruch 2, bei der
die Liste (252) Identifikationsinformationen von Gateways (211, 213, 214) einer Vielzahl von Zugriffsdienstnetzen enthält, die an ein Zugriffsdienstnetz angrenzen, zu dem die Relocation-Steuervorrichtung in einer Netztepologie gehört.

4. Relocation-Steuervorrichtung nach Anspruch 2 oder 3, bei der
die Steueranordnung (312) die identifikationsinformationen des Zielzugriffsdienstnetzes in der Speicheranordnung (342) speichert, falls die Zielidentifikationsinformationen in der Liste (352) enthalten sind, und den Relocation-Prozess unter Verwendung der gespeicherten Identifikationsinformationen des Zielzugriffsdienstnetzes startet, falls eine Überlastung in dem Gateway (312) des Zugriffsdienstnetzes auftritt, das mit dem Konnektivitätsdienstnetz verbunden ist.

5. Relocation-Steuervorrichtung nach einem der Ansprüche 2 bis 4, bei der
die Steueranordnung (412) Systeminformationen erhält, die ein Vorhandensein/Nichtvorhandensein einer Überlastung in der Vielzahl von Gateways (411, 413) angeben, die in der Liste (451) enthalten sind, und dann, falls eine Überlastung in dem Gateway (412) des Zugriffsdienstnetzes auftritt, das mit dem Konnektivitätsdienstnetz verbunden ist, den Relocation-Prozess unter Verwendung, als Zielzugriffsdienstnetz, eines Zugriffsdienstnetzes startet, zu dem ein Gateway (413) unter der Vielzahl von Gateways gehört, wo keine Überlastung auftritt.

6. Relocation-Steuervorrichtung nach einem der Ansprüche 2 bis 5, bei der
die Steueranordnung (511) prüft, ob Ressourcen, die in dem Gateway (511) des Zugriffsdienstnetzes verwendet werden, das mit dem Konnktivitätsdienstnetz verbunden ist, eine Schwellenwert überschreiten oder nicht, falls die Identifikationsinformationen des Zielzugriffsdienstnetzes in der Liste (551) enthalten sind, und den Relocation-Prozess startet, falls die Ressourcen, die verwendet werden, den Schwellenwert überschreiten.

7. Relocation-Steuervorrichtung nach Anspruch 6, bei der
die Steueranordnung (511) als Ressourcen, die verwendet werden, eine Anzahl von Mobilstationen (531, 532, 533, 534) prüft, die mit dem Gateway des Zugriffsdienstnetzes verbunden sind, das mit dem Konnektivitätsdienstnetz verbunden ist.

8. Relocation-steuervorrichtung nach Anspruch 2, bei der
die Steueranordnung (611) prüft, ob ein Band, das durch das Gateway (611) des Zugriffsdienstnetzes verwendet wird, das mit dem Konnektivitätsdienstnetz verbunden ist, einen Schwellenwert überschreitet oder nicht, falls die Identifikotionsinformationen des Zielzugriffsdienstnetzes in der Liste (651) enthalten sind, und dann, falls das verwendete Band den Schwellenwert überschreitet, den Relocation-Prozess startet.

9. Relocation-Steuervorrichtung nach Anspruch 2, bei der
die Steueranordnung (712) Instruktionsinformationen empfängt, die den Aufruf oder Nichtaufruf der Relocation angeben, die Instruktionsinformationen prüft, falls die Zielidentifikationsinformationen in der Liste (752) enthalten sind, und den Relocation-Prozess startet, falls die Instruktionsinformatinnen den Aufruf der Relocation angeben.

10. Relocation-Steuerverfahren zum Steuern einer Verbindung zwischen einem Zugriffsdienstnetz (32) und einem Konnektivitätsdienstnetz (42) in einem Kommunikationsnetz, welches das Zugriffsdienstnetz enthält, auf das eine Mobilstation (231, 331, 431, 535, 631, 731) drahtlos zugreift, und das Konnektivitätsdienstnetz, um der Mobilstation Dienste, die eine Internet-Protokoll-Verbindung enthalten, über das Zugriffsdienstnets anzubieten, umfassend:
Durchsuchen einer Liste (103, 252, 352, 451, 551, 651, 752), die Identifikationsinformationen einer Vielzahl von Zugriffsdienstnetzen enthält, unter Verwendung, als Schlüssel, von Zielidentifikationsinformationen eines Zugriffsdienstnetzes, das durch eine Handover-Aufforderung für die Mobilstation spezifiziert ist; und
Starten eines Relocation-Prozesses zum Umstellen des Zugriffsdienstnetzes, das mit dem Konnektivitätsdienstmitz verbunden ist, auf das Zielzugriffsdienstnetz, falls die Identifikationsinformationen nicht in der Liste enthalten sind.

## Revendications

1. Appareil de contrôle de réadressage pour contrôler une connexion entre un réseau de service d'accès (32) et un réseau de service de connectivité (42) dans un réseau de communications comprenant le réseau de service d'accès auquel une station mobile (231, 331, 431, 535, 631, 731) accède sans fil et le réseau de service de connectivité pour délivrer à la station mobile un service comprenant une connexion de protocole Internet par l'intermédiaire du réseau de service d'accès, comportant :
un dispositif de stockage (101, 242, 342, 441, 541, 641, 742) pour mémoriser une liste (103, 252, 352, 451, 551, 651, 752) comprenant une information d'identification d'une pluralité de réseaux de service d'accès ; et
un dispositif de contrôle (102, 212, 312, 412, 511, 611, 712) pour rechercher la liste en utilisant en tant que clé une identification cible d'un réseau de service d'accès qui est spécifiée par une demande de transfert pour la station mobile, et pour commencer une processus de réadressage afin de changer le réseau de service d'accès relié au réseau de service de connectivité en un réseau de service d'accès cible si l'information d'identification du réseau de service d'accès cible spécifiée par la demande de transfert pour la station mobile n'est pas comprise dans la liste.

2. Appareil de contrôle de réadressage selon la revendication 1, dans lequel :
la liste (252, 352, 451, 551, 651, 752) comprend une information d'identification d'une pluralité de passerelles (211, 213, 214, 311, 313, 314, 411, 413, 512, 612, 711, 713, 714, 715), qui appartiennent respectivement à la pluralité de réseaux de service d'accès ; et
ledit dispositif de contrôle (212, 312, 412, 511, 611, 712) recherche la liste en utilisant une information d'identification d'une passerelle cible (215, 314, 413, 512, 612, 715) du réseau de service d'accès cible en tant qu'information d'identification, et, si l'information d'identification n'est pas comprise dans la liste, commence le processus de réadressage pour changer une passerelle du réseau de service d'accès relié au réseau de service de connectivité en une passerelle cible du réseau de service d'accès cible.

3. Appareil de contrôle de réadressage selon la revendication 2, dans lequel
la liste (252) comprend une information d'identification des passerelles (211, 213, 214) d'une pluralité de réseaux de service d'accès adjacents à un réseau de service d'accès auquel appartient l'appareil de contrôle de réadressage selon une topologie de réseau.

4. Appareil de contrôle de réadressage selon la revendication 2 ou 3, dans lequel
ledit dispositif de contrôle (312) mémorise l'information d'identification du réseau de service d'accès cible dans ledit dispositif de stockage (342) si l'information d'identification cible est comprise dans la liste (352), et commence le processus de réadressage en utilisant l'information d'identification mémorisée du réseau de service d'accès cible si un encombrement se produit dans la passerelle (312) du réseau de service d'accès relié au réseau de service de connectivité.

5. Appareil de contrôle de réadressage selon l'une quelconque des revendications 2 à 4, dans lequel
ledit dispositif de contrôle (412) obtient une information de système qui indique une présence/absence d'encombrement dans la pluralité de passerelles (411, 413) comprise dans la liste (451), et, si un encombrement se produit dans la passerelle (412) du réseau de service d'accès relié au réseau de service de connectivité, commence le processus de réadressage en utilisant, en tant que réseau de service d'accès cible, un réseau de service d'accès auquel appartient; une passerelle (413) où ne se produit, pas d'encombrement: parmi la pluralité de passerelles.

6. Appareil de contrôle de réadressage selon l'une quelconque des revendications 2 à 5, dans lequel
ledit dispositif de contrôle (511) contrôle si oui ou non des ressources utilisées dans la passerelle (511) du réseau de service d'accès relié au réseau de service de connectivité dépassent une valeur de seuil si l'information d'identification du réseau de service d'accès cible est comprise dans la liste (551), et commence le processus de réadressage si les ressources utilisées dépassent à valeur de seuil.

7. Appareil de contrôle de réadressage selon la revendication 6, dans lequel
ledit dispositif de contrôle (511) contrôle, en tant que ressources utilisées, un nombre de stations mobiles (531, 532, 533, 534) reliées à la passerelle du réseau de service d'accès relié au réseau de service de connectivité.

8. Appareil 1 de contrôle de réadressage selon la revendication 2, dans lequel
ledit dispositif de contrôle (611) contrôle si oui ou non une bande utilisée par la passerelle (611) du réseau de service d'accès relié au réseau de service de connectivité dépasse une valeur de seuil si l'information d'identification du réseau de service d'accès cible est comprise dans la liste (651), et, si la bande utilisée dépasse la valeur de seuil, commence le processus de réadressage.

9. Appareil de contrôle de réadressage selon la revendication 2, dans lequel
ledit dispositif de contrôle (712) reçoit une information d'instruction qui indique une invocation ou une non invocation de réadressage, contrôle l'information d'instruction si l'information d'identification cible est comprise dans la liste (752), et commence le processus de réadressage si l'information d'instruction indique l'invocation du réadressage.

10. Procédé de contrôle de réadressage pour contrôler une connexion entre un réseau de service d'accès (32) et un réseau de service de connectivité (42) dans un réseau de communications comprenant le réseau de service d'accès auquel une station mobile (231, 331, 431, 535, 631, 731) accède sans fil, et le réseau de service de connectivité pour délivrer à la station mobile des services comprenant une connexion de protocole Internet par l'intermédiaire du réseau de service d'accès, comportant :
la recherche d'une liste (103, 252, 352, 451, 551, 651, 752) comprenant une information d'identification d'une pluralité de réseaux de service d'accès en utilisant en tant que clé une information d'identification cible d'un réseau de service d'accès qui est spécifiée par une requête de transfert pour la station mobile ; et
le commencement d'un processus de réadressage pour changer le réseau de service d'accès relié au réseau de service de connectivité en un réseau de service d'accès cible si l'information d'identification n'est pas comprise dans la liste.
